# EUROPÄISCHE PATENTSCHRIFT

(11) **EP 2 726 752 B1**
(45) Veröffentlichungstag und Bekanntmachung des Hinweises auf die Patenterteilung: **03.05.2017**
(21) Anmeldenummer: 12755953.2
(22) Anmeldetag: 29.06.2012
(51) Int. Cl.: F16D 3/205

(54) **TRIPODEGELENK MIT GERINGEN VIBRATIONSANREGUNGSKRÄFTEN**
TRIPOD JOINT HAVING LOW VIBRATION INDUCING FORCES
JOINT TRIPODE À FAIBLES FORCES D'EXCITATION VIBRATOIRE

(30) Priorität: 30.06.2011 DE 102011078398
(43) Veröffentlichungstag der Anmeldung: 07.05.2014
(73) Patentinhaber: Neapco Europe GmbH, 52351 Düren (DE)
(72) Erfinder: SIMONS, Karl-Heinz, 52399 Merzenich (DE); ELING, Michael, 51109 Köln (DE); BOOS, Achim, 53797 Lohmar (DE)
(74) Vertreter: Lohmanns, Bernard
(86) Internationale Anmeldenummer: PCT/EP2012/002756
(87) Internationale Veröffentlichungsnummer: WO 2013/000581

(56) Entgegenhaltungen:
- DE-A1-102009 000 561
- FR-A1- 2 738 881
- US-A- 4 768 990
- US-B1- 6 375 576
- "FREE SLIP DRIVE ASSEMBLY FOR TELESCOPIC TRIPOT UNIVERSAL JOINTS", RESEARCH DISCLOSURE, MASON PUBLICATIONS, HAMPSHIRE, GB, Nr. 312, 1. April 1990 (1990-04-01), Seite 293, XP000104601, ISSN: 0374-4353

## Beschreibung

Gegenstand der vorliegenden Erfindung ist ein Tripodegelenk für ein Kraftfahrzeug gemäß Oberbegriff des Anspruchs 1.

Tripodegelenke, die auch als "Konstantgeschwindigkeitsuniversalgelenke" (kurz CV-Gelenk) oder auch als "homokinetische Gelenke" bezeichnet werden, sind aus dem Stand der Technik seit langem bekannt. Sie werden beispielsweise als Innengelenke für die Antriebswellen vorderradangetriebener Kraftfahrzeuge verwendet. Sie weisen hervorragende Gleichlaufeigenschaften auf und können bis zu Winkeln von typ. über 10 ° abgewinkelt werden. Darüber hinaus können Tripodegelenke vorteilhaft auch für Kardanwellen hinterradangetriebener oder allradangetriebener Kraftfahrzeuge eingesetzt werden. Herkömmliche Tripodegelenke sind jedoch problematisch, wenn die Wellen in Bezug aufeinander gelenkig abgewinkelt werden, das heißt einen Arbeitswinkel bilden. Gerade hier kommt es darauf an, bei den im Roll- beziehungsweise Wälzkontakt stehenden Komponenten ein relatives Gleiten zu vermeiden. Der mit dem Gleiten einhergehende große Reibungswiderstand führt einerseits zu einem erhöhten Verschleiß und einer erhöhten Verlustleistung des Gelenks, birgt anderseits die Gefahr, dass das Gelenk rüttelt. Dies vermindert nicht nur die Lebensdauer der Lager der durch das Gelenk verbundenen Wellen sondern beeinträchtigt auch die Laufruhe des Fahrzeugs.

Es werden große Anstrengungen unternommen, die Laufeigenschaften von Tripodegelenken zu verbessern. So offenbart beispielsweise die DE 41 301 83 A1 ein Tripodegelenk, bei dem durch spezielle Ausgestaltung der Bahnen in dem äußeren Gelenkelement sowie der Außenringe der Rollen ein Verkippen des Außenrings in der Bahn z.B. bei einer Lasteinleitung oder einem Lastwechsel verhindert werden soll. Dieser Rollkontakt zwischen Rolle und Bahn des äußeren Gelenkelements ist nicht Gegenstand der vorliegenden Erfindung.

Andere Problemstellen, die Gegenstand der vorliegenden Erfindung sind, sind die Rollkontakte zwischen dem Achszapfen, kurz im Folgenden auch als Achszapfen bezeichnet, des inneren Gelenkteils und der Rolle sowie die Wälzkontakte der Komponenten der üblicherweise als Wälzlager mit Innenring, Außenring und mehreren Wälzkörpern ausgebildeten Rolle.

Beispielsweise schlägt die DE 102 06 733 A1 eine Kugel-/Kugelkontaktoberfläche zwischen Achszapfen und Rolle, beziehungsweise deren Innenring, vor, da angenommen wurde, dass durch eine Verteilung der Hertz' schen Spannung über eine möglichst große Kontaktfläche die Reibung und damit das Rütteln verringert wird. Die Erfinder der vorliegenden Erfindung haben jedoch überraschend festgestellt, dass das Rütteln sich durch diese Maßnahme verstärkt, also die Vibrationsanregungskräfte sich scheinbar verstärken.

Es ist ferner bekannt, Einschnürungen an der Bohrung der Rolle vorzunehmen. Diese Einschnürungen gelangen zumeist beim Betrieb des Tripodegelenks nicht in Berührung mit dem Achszapfen und dienen lediglich als eine Form der Montagehilfe, dazu bei der Montage die Rolle auf dem Achszapfen zu sichern.

Die Veröffentlichung "Free slip drive assembly for telescopic tripot universal Joints", Research Disclosure, Mason Publications, Hampshire, GB, Nr. 312, 1. April 1990 (1990-04-01), Seite 293, XP000104601, ISSN:0374-4353 offenbart mit darin vorhandenem Verweis auf die US 4 768 990 A ein Tripodegelenk gemäß dem Oberbegriff des Anspruchs 1.

Aufgabe der vorliegenden Erfindung ist es daher, ein Tripodegelenk mit vorteilhaften Laufeigenschaften, insbesondere mit minimalem Rütteln, bereitzustellen. Weiterhin soll ein Verfahren zur Herstellung eines vorteilhaften Tripodegelenks angegeben werden. Gelöst wird diese Aufgabe durch ein Tripodegelenk mit den Merkmalen des Anspruchs 1 sowie durch ein Verfahren sowie die Verwendung gemäß der nebengeordneten Ansprüche gelöst. Vorteilhafte Ausgestaltungen sind jeweils Gegenstand der abhängigen Ansprüche. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Das erfindungsgemäße Tripodegelenk weist ein äußeres Gelenkelement, auch Tulpe genannt, mit mehreren, über dessen Innenumfang verteilten, sich axial erstreckenden, länglichen, darin ausgebildeten Bahnen auf. Beispielsweise sind die Bahnen als Ausnehmungen in die Innenwandung des äußeren Gelenkelements eingearbeitet. Das erfindungsgemäß Gelenk, auch Tripodestern genannt, umfasst ein inneres Gelenkelement mit mehreren, bevorzugt drei, über den Umfang verteilten, radialen Achszapfen. Das erfindungsgemäße Gelenk umfasst ferner nigstens eine der Anzahl entsprechende Anzahl von Rollen, wobei die Rolle jeweils mit einer zentralen Bohrung auf dem zugehörigen Achszapfen verschwenkbar gehalten wird und in Eingriff mit den länglichen Bahnen des äußeren Gelenkelelements steht, wobei die Rolle in der zugehörigen Bahn in Axialrichtung des äußeren Gelenkelements verschiebbar aufgenommen ist. Die Verschwenkbarkeit der Rolle gewährleistet, dass die Rolle bei abgewinkeltem und rotierendem Gelenk und bei seiner sich durch die Abwinklung ergebenden Hin- und Her-Oszillation in der Bahn des äußeren Gelenkelements seine Ausrichtung bezüglich der Bahn beibehält. Erfindungsgemäß können die Abrollflächen der Bahnen und der Rollen beliebig ausgestaltet sind. Es obliegt dem Fachmann hier die geeignete aus dem Stand der Technik geläufige, den Anforderungen entsprechende Ausgestaltung zu wählen. "Axial" bzw. "Axialrichtung" bezieht sich auf die entsprechende Drehachse, beispielsweise des äußeren Gelenkelements beziehungsweise des inneren Gelenkelements sowie der Rolle.

Bevorzugt weist jeder Achszapfen auf seinem Umfang zwei äußere, diametral gegenüberliegende Kugelendflächen für den Eingriff in die Bohrung der Rolle auf. Ferner ist erfindungsgemäß vorgesehen, dass die Bohrung einen zylindrischen Abschnitt für den Eingriff mit den Kugelendflächen aufweist, um die Rolle relativ zum Achszapfen verschiebbar zu lagern. In Axialrichtung der Bohrung ist wenigstens auf einer Seite des zylindrischen Abschnitts und daran sich anschließend ein Einschnürungsabschnitt vorgesehen, der die Kugelendflächen hintergreift, um die Verschiebebewegung zu begrenzen. Der Einschnürungsabschnitt meint eine Verjüngung der Bohrung. Beispielsweise ist die Verjüngung auf der dem Mittelpunkt des inneren Gelenkteils zugewandten Seite des zylindrischen Abschnitts vorgesehen, um das Trennen der Rolle von dem Achszapfen zu verhindern. Alternativ oder bevorzugt zusätzlich ist ein weiterer Einschnürungsabschnitt auf der in Axialrichtung der Bohrung gegenüberliegenden Seite des zylindrischen Abschnitts vorgesehen, um die Verschiebebeweglichkeit der Rolle in diese Richtung zu beschränken und um beispielsweise zu verhindern, dass die Rolle den Berührkontakt mit dem äußeren Gelenkelement verliert.

Erfindungsgemäß ist ferner vorgesehen, dass in Axialrichtung der Bohrung ein stetiger Übergang von dem zylindrischen Abschnitt zu dem Einschnürungsabschnitt vorgesehen ist. Im zylindrischen Abschnitt wird eine Zylinder-/Kugelkontaktfläche bereitgestellt. Erfindungsgemäß ist es vorgesehen, dass in wenigstens einer Stellung des Tripodegelenks sich ein Berührkontakt zwischen dem wenigstens einer Einschnürungsabschnitt und dem Achszapfen bzw. der zugehörigen Kugelendfläche ausbildet. Somit definieren die Begriffe Einschnürungsabschnitt und Kugelendfläche solche Abschnitte des Umfangs des jeweiligen Bauelements, die als Berührfläche in wenigstens einer Stellung des Tripodegelenks in Frage kommen. D.h. solche außerhalb jeder Wahrscheinlichkeit einer wechselseitigen Berührung liegenden Abschnitte von Bohrung und Kugelkontaktfläche können erfindungsgemäß beliebig bzw. den konstruktiven Anforderungen entsprechend ausgestaltet sein.

Der Begriff Kugelendfläche ist weit auszulegen und betrifft beispielsweise beliebig konvex gekrümmte Endflächen, bevorzugt sind diese kugelförmig und/oder durch einen Krümmungsradius definiert.

Es hat sich überraschend gezeigt, dass durch diese erfindungsgemäße Ausbildung der Berührfläche die Vibrationsanregung also das Rütteln in gestreckter Ausrichtung des Gelenks minimiert ist. Der stetige Übergang sorgt dafür, dass dieser Vorteil bei angewinkeltem Gelenk erhalten bleibt, ohne dass auf den konstruktiven Vorteil der Verschiebewegbegrenzung verzichtet werden muss. Dieser konstruktive Vorteil begründet sich beispielsweise darauf, dass die Bahnen keine die Rollen in deren Axialrichtung fixierende Ausgestaltung aufweisen müssen. Wie zuvor erwähnt, sind erfindungsgemäß bevorzugt sich beidseitig in Axialrichtung an den zylindrischen Abschnitt stetig anschließend Einschnürungsabschnitte vorgesehen.

Zu Minimierung des Rüttelns ist bzw. sind bevorzugt konkav gekrümmte, besonders bevorzugt kugelflächenförmigen, Einschnürungsbereiche vorgesehen.

Bevorzugt ist der Einschnürungsabschnitt komplementär zu der zugehörigen Kugelendfläche ausgebildet. Dann schmiegt sich der Achszapfenradius lebensdauererhaltend an den Innenumfang des Einschnürungsabschnitts der Bohrung an.

Bevorzugt weist der Einschnürungsabschnitt und die zugehörige Kugelendfläche, d.h. diejenige Kugelendfläche mit der der Berührkontakt zustande kommt, den annähernd gleichen Krümmungsradius auf. Das Verhältnis aus dem, gegebenenfalls kleinsten für den Fall dass es sich um keine rein kugelfächenförmige Ausbildung handelt, Krümmungsradius des Einschnürungsabschnitts (9d, 9e) und dem, gegebenenfalls größten Krümmungsradius der zugehörigen Kugelendfläche (16) liegt zwischen 1, 00 und 1, 01, bevorzugt zwischen 1,05 und 1,08, wobei die Bereichsgrenzen jeweils mit eingeschlossen sein sollen.

Erfindungsgemäß weist die Rolle einen Außenring, einen die Bohrung aufweisenden Innenring sowie optional dazwischen angeordnete Wälzkörper auf, wobei der Außenring relativ zum Innenring in Axialrichtung der Bohrung verschiebbar ist. Dadurch wird neben der translatorischen Verschiebbarkeit bezüglich des Achszapfens eine zusätzliche Verschiebbarkeit bereitgestellt. Diese teleskopische Verschiebung hat sich als besonders vorteilhaft bei der Rüttelvermeidung insbesondere bei abgewinkeltem Gelenk erwiesen. Der zum Funktionieren eines Tripodegelenkes erforderliche Längenausgleich des Achszapfen/Rollensystems, also der Verschiebeweg, wird so vorteilhaft in zwei Teilbewegungen aufgeteilt: Es gibt eine achszapfenseitige Bewegung des Innenringes zum Achszapfen sowie eine Bewegung des Außenrings bezüglich des Innenrings der Rolle.

Erfindungsgemäß ist vorgesehen, dass spätestens bei maximaler Abwinklung des Tripodegelenks der Außenring relativ zum Innenring in Axialrichtung des Achszapfens und der Innenring auf dem Achszapfen gegenüber deren Stellung bei nicht abgewinkeltem Tripodegelenk verschoben sind.

Erfindungsgemäß ist das Gelenk so ausgestaltet, dass mit zunehmender Abwinklung des Tripodegelenks aus der nicht abgewinkelten Stellung zuerst der Innenring auf dem Achszapfen und dann der Außenring relativ zum Innenring in Axialrichtung des Achszapfens verschoben werden.

Beispielsweise bewegt sich der Innenring zum Achszapfen aufgrund der geringeren Reibung zuerst und ist somit erster Teil einer Teleskopbewegung zwischen Achszapfen und Außenring. Dann schmiegt sich der Achszapfenradius "lebensdauerfreundlich" an den Einschnürungsabschnitt des Innenringes an und nimmt diesen "mit". Der achszapfenseitige Verschiebeweg ist wie oben beschrieben funktional auf den ersten Abwinkelbereich des Gelenks begrenzt. Der nadelseitige Verschiebeweg ist funktional unbegrenzt möglich. Aufgrund der Beschränkung auf die Innenring-Achszapfen-Verschiebung beim ersten Abwinkelbereich aus der nicht abgewinkelten Stellung und danach auf die Außenring-Innenring-Verschiebung bei größerer Abwinklung wird sichergestellt, dass die nur die erste geräuschs- und vibrationsunkritische Verschiebung dann erfolgt, wenn es zu geringer Abwinklung des Gelenks kommt, beispielsweise bei leichter kurvenfahrt oder beim Beschleunigen in Geradeausfahrt, bei der er zur Verschiebung aufgrund von Tordierung kommt. Somit wird der Fahrkomfort beim Beschleunigen des Kraftfahrzeuges gesteigert. Bei großen Gelenkabwinklungen, die aufgrund der Radaufhängungsbewegung entstehen, ist ein weiterer Verschiebeweg erforderlich, der dann über die Verschiebung des Innenringes zum Außenring gewährleistet wird.

Gemäß einer bevorzugten Ausgestaltung ist vorgesehen, dass der maximale Verschiebeweg des Innenrings bezüglich des Achszapfens in Axialrichtung des Achszapfens kleiner ist als der maximale Verschiebeweg des Außenrings bezüglich des Innenrings in Axialrichtung des Achszapfens.

Bevorzugt beträgt das Verhältnis aus maximalem Verschiebeweg des Innenrings bezüglich des Achszapfen in Axialrichtung des Achszapfens zu maximalem Verschiebeweg des Außenrings bezüglich des Innenrings in Axialrichtung des Achszapfens weniger als 1:2 beträgt, bevorzugt weniger als 1:3 beträgt. Noch bevorzugter beträgt das Verhältnis weniger als 1:3,3, wie beispielsweise 1:3,48. Beispielsweise wird der maximale Verschiebeweg durch die Position des geometrischen Mittels der betroffenen Komponente bzw. Komponenten in der jeweiligen Maximalposition bezogen auf diejenige Position in der nichtabgewinkelten Stellung des Tripodegelenks definiert.

Besonders vorteilhaft ist eine Ausgestaltung, bei der die maximal mögliche Verschiebung der Wälzkörper in Axialrichtung (bezogen auf deren Wälzbewegung) bezüglich des Innenrings kleiner ist als die maximal mögliche Verschiebung der Wälzkörper in Axialrichtung (bezogen auf die Wälzbewegung) bezüglich des Außenrings. Bevorzugt ist das Spiel der Wälzkörper in Axialrichtung am Innenring auf das für die Drehbewegung erforderliche und/oder das bearbeitungstechnisch sich ergebende Mindestmaß beschränkt.

Aufgrund der sich daraus ergebenden geringen Ausdehnung in radialer Richtung handelt es sich bei den Wälzkörpern um Nadeln, wobei die Bewegung der Nadeln in axialer Richtung bezogen auf deren Wälzbewegung durch Auskragungen am Innenring und/oder Außenring begrenzt wird.

Zur Minimierung der Gefahr einer Vibrationsanregung durch die Wälzbewegung der Wälzkörper bilden bevorzugt die Auskragungen im Zentrum der axialen Stirnfläche der Nadeln eine Berührfläche mit diesen aus. Bevorzugt sind die Stirnflächen der Nadeln konvex geformt.

Bevorzugt weist der Achszapfen jeweils in Umfangsrichtung zwischen den Kugelendflächen Abflachungen auf, dadurch kann die Rolle leicht möglichst ohne notwendige Deformation an Achszapfen und/oder Innenring beispielsweise durch eine Verschwenkbewegung auf den Achszapfen aufgesetzt werden.

Bevorzugt findet das Tripodegelenk in einer der zuvor beschriebenen Ausführungsformen Verwendung an einem Kraftfahrzeug. Aufgrund der durch die erfindungsgemäße Ausgestaltung sich ergebenden geringen Vibrationsanregung wird es beispielsweise als Innengelenke für die Antriebswellen vorderradangetriebener Kraftfahrzeuge für Kardanwellen hinterradangetriebener oder allradangetriebener Kraftfahrzeuge eingesetzt.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigen schematisch:
- Fig. 1:: eine perspektivische Teilschnittdarstellung eines ersten Ausführungsbeispiels eines erfindungsgemäßen Tripodegelenks 1;
- Fig. 2:: eine Explosionsdarstellung des erfindungsgemäßen Tripodegelenks aus Fig. 1;
- Fig. 3:: die Schnittdarstellung der Rolle 6 des erfindungsgemäßen Tripodegelenks 1 aus Figur 1,
- Fig. 4:: eine Schnittdarstellung zur Verdeutlichung der Bohrungsgeometrie des Innenrings der Rolle des erfindungsgemäßen Tripodegelenks aus Figur 1.

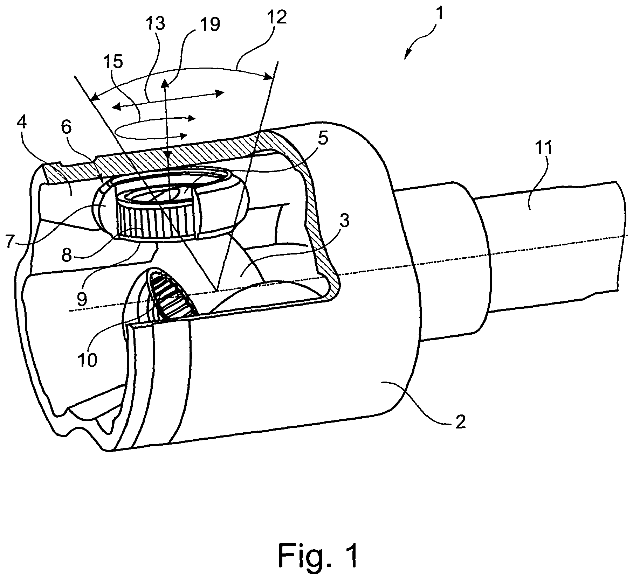

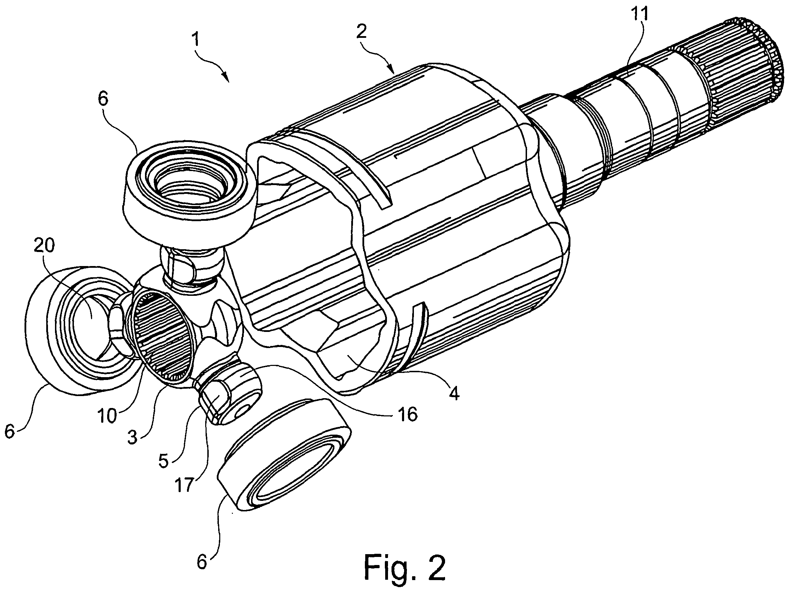

Figur 1 und 2 zeigen in schematischer Darstellung ein Ausführungsbeispiel eines erfindungsgemäßen Tripodegelenks 1 in perspektivischer Ansicht bzw. Explosionsansicht. Das äußere Gelenkelement 2 weist eine die Axialrichtung des äußeren Gelenkelements definierende Drehachse auf und ist einseitig geöffnet. An seinem geschlossenen Ende mündet das äußere Gelenkelement 2 in einen Wellenschaft 11 zum Anschluss beispielsweise an eine nicht dargestellte Abtriebswelle eines Getriebes des Kraftfahrzeugs. Im äußeren Gelenkelement 2 sind drei Bahnen 4 ausgebildet, die sich längs der Axialrichtung erstrecken. Jede Bahne 4 bildet zwei gegenüber liegend angeordnete Laufflächen aus, auf denen in die Bahn 4 eingesetzte Rollen 6 abrollen, von denen in Figur 1 aus Gründen der Verdeutlichung eine in Schnittdarstellung gezeigt ist. Die Rolle 6 weist einen Innenring 9, einen Außenring 7, der in Eingriff mit der Bahn 6 steht sowie zwischen den Ringen 7, 9 angeordnete Nadeln 8 als Wälzkörper auf. Wie aus Figur 1 weiter ersichtlich ist, ist jede Rolle 6 auf einem Achszapfen 5 des in das äußere Gelenkelement 2 eingesetzten inneren Gelenkelements 3, auch Tripodestern genannt, gehalten. Wie Figur 2 zeigt, weist der Achszapfen 5 zwei diametral gegenüberliegende Kugelendflächen 16 für den Eingriff mit der Innenfläche der Bohrung 20 des jeweiligen Innenrings 9 der Rolle 6 auf. Zur Erleichterung der Montage ist der Achszapfen 5 zwischen den Kugelendflächen 16 in Umfangsrichtung abgeflacht. Diese Abflachungen 17 gestatten das Aufsetzen der Rollen 6 durch eine Schwenkbewegung. Einmal in Eingriff mit dem Innenring 9 gestatten diese "teilkugelige" Ausgestaltung der Achszapfen 5 u.a. ein Verschwenken der Rollen 6 bezüglich der Achszapfen 5.

Der Tripodestern 3 weist eine Innenausnehmung 10 auf, in dessen Innenwandung eine Vielzahl von Splines zum Anschluss einer nicht dargestellten Verbindungswelle, beispielsweise zu einem Kugelverschiebegelenk ausgebildet ist. Die Drehachse der Welle bzw. des inneren Gelenkelements 3 definiert die Axialrichtung des inneren Gelenkelements 3. Wie in Figur 1 gezeigt, ermöglicht das Gelenk 1 eine Abwinkling zwischen der Welle 11 und der Drehachse des inneren Gelenkelements 3, der Schwenkfreiheitsgrad ist durch den Pfeil 12 angedeutet. In der abgewinkelten Stellung vollführen die Achszapfen 5 bei Drehung des Gelenks 1 eine durch den Doppelpfeil 13 angedeutete Oszillationsbewegung in den Bahnen 4. Gleichzeitig rotieren die Außenringe 7 der Rollen 6 um deren Innenringe 9, wie der Doppelpfeil 15 verdeutlicht. Die nachfolgend beschriebene spezielle Ausgestaltung der Bohrung 20 der Innenringe 9 gestattet eine Verschiebung der Innenringe bezüglich des Achszapfens in radialer Richtung des äußeren Gelenkelements 2, wie durch den Pfeil 14 angedeutet ist.

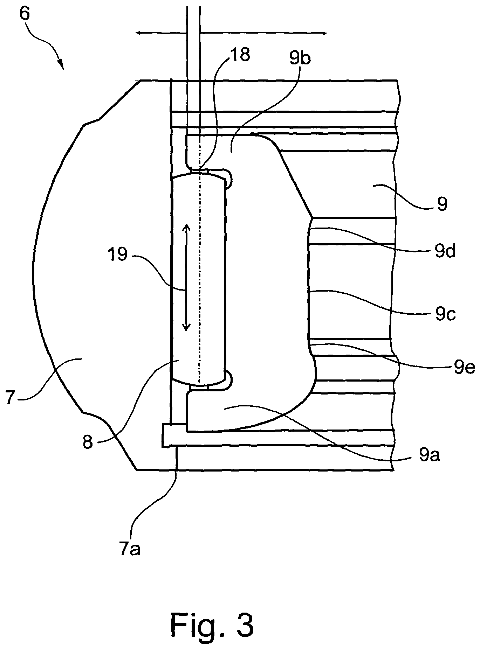

Eine zusätzliche Verschiebbarkeit 19 des Außenrings 7 bezüglich des Innenrings 9 in Richtung parallel zu deren Drehachse ergibt sich durch deren konstruktive Ausgestaltung, die in Fig. 3 zu sehen ist. Der Innenring 9 definiert eine Lauffläche für die Nadeln 8 als Wälzkörper. Die Wälzkörper 8 werden in der Laufbahn durch am Rand des Außenumfangs umlaufende Auskragungen 9a, 9b in der Laufbahn gehalten. Die Auskragungen 9a, 9b sind ausgebildet, dass sie jeweils im Zentrum 18 von deren Stirnflächen, also in der Drehachse, eine fast punktförmige Berührfläche ausbilden. Die die mit den Wälzkörpern 8 eine Lauffläche bildende Innenumfangsfläche des Außenrings 7 weist eine über die Breite der Nadeln 8 hinausgehende Ausdehnung auf und ermöglicht eine Verschiebung des Außenrings 7 bezüglich der Nadeln 8 parallel zu deren Wälzrichtung. Diese Verschiebebewegung ist im nicht zusammengebauten Zustand des Gelenks 1 lediglich in eine Richtung durch die einseitige Auskragung 7a am Außenring 7 begrenzt.

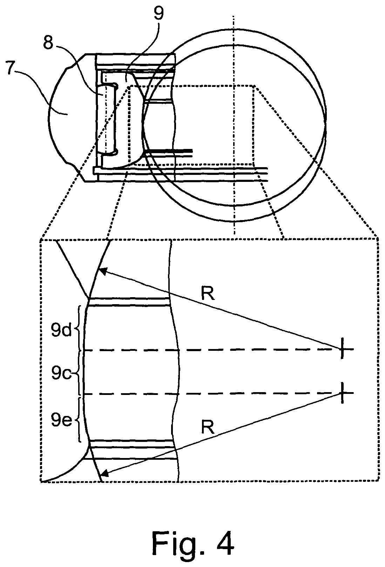

Aus Fig. 4 wird deutlich, dass die durch die Bohrung 20 im Innenring 9 bereitgestellte Innenumfangsfläche, die mit den Kugelendflächen 16 des Achszapfens 5 aus Fig. 2 in Eingriff steht, drei Abschnitte aufweist. Einen mittleren zylindrischen Abschnitt 9c sowie zwei, sich stetig an diesen Abschnitt 9c anschließende Einschnürungsabschnitte 9d, 9e. Diese durch Kugelflächen definierten konkav ausgebildeten Einschnürungsabschnitte 9d und 9e hintergreifen die Kugelendflächen 16 der Achszapfen 5, sofern die Drehachsen der betreffenden Rolle 6 parallel zur Axialrichtung der Achszapfen 5 ausgerichtet ist. Erst bei Überschreiten einer vorgegebenen Verschwenkung der Rolle 6 bezüglich des Achszapfens 5, gelangt der Achszapfen 5 aus dem Eingriff und die Rolle 6 kann vom Achszapfen 5 getrennt werden. Damit wird der bei entsprechender Ausrichtung der Rollen 6 in einem vorgegebenen Schwenkbereich um diese zuvor erwähnte Parallelausrichtung diese auf dem Achszapfen 5 festgelegt. Der zylindrische Abschnitt 9c sorgt für einen Zylinder/Kugelkontakt zwischen Achszapfen 5 und Innenring 9, gleichzeitig wird eine Verschiebbarkeit des Innenrings 9 gegenüber dem Achszapfen 5 in Erstreckungsrichtung des Achszapfens 5 ermöglicht.

## Patentansprüche

1. Tripodegelenk (1), aufweisend
ein äußeres Gelenkelement (2) mit mehreren, über dessen Innenumfang verteilten, sich axial erstreckenden, länglichen, darin ausgebildeten Bahnen (4);
ein inneres Gelenkelement (3) mit mehreren über dessen Außenumfang verteilten, radialen Achszapfen (5);
wenigstens eine der Anzahl der Achszapfen (5) entsprechende Anzahl von Rollen (6), wobei die Rolle (6) jeweils mit einer zentralen Bohrung (20) auf dem zugehörigen Achszapfen (5) verschwenkbar gehalten wird und in Eingriff mit den länglichen Bahnen (4) steht, wobei die Rolle (6) in der zugehörigen Bahn (4) in Axialrichtung des äußeren Gelenkelements (2) verschiebbar ist;
wobei jeder Achszapfen (5) auf seinem Umfang zwei äußere, diametral gegenüberliegende Kugelendflächen (16) für den Eingriff in die Bohrung (20) aufweist; wobei die Bohrung (20) einen zylindrischen Abschnitt (9c) für den Eingriff mit den Kugelendflächen (16), um die Rolle (6) relativ zum Achszapfen (5) verschiebbar zu lagern, und wenigstens einen sich in Axialrichtung unter Ausbildung eines stetigen Übergangs auf einer Seite des zylindrischen Abschnitts (9c) anschließenden, die zugehörige Kugelendfläche hintergreifenden Einschnürungsabschnitt (9d, 9e) zur Begrenzung der Verschiebebewegung aufweist, und
wobei der Einschnürungsabschnitt so angeordnet ist, dass in wenigstens einer Stellung des Tripodegelenks der Einschnürungsabschnitt (9d, 9e) am Achszapfen anliegt, und **dadurch gekennzeichnet, dass** die Rolle (6) einen Außenring (7), einen die Bohrung (20) aufweisenden Innenring (9) sowie optional dazwischen angeordnete Wälzkörper (8) umfasst, dass der Außenring (7) relativ zum Innenring (9) in Axialrichtung des Achszapfens (5) verschiebbar ist und
dass das Tripodegelenk (1) so ausgestaltet ist, dass spätestens bei maximaler Abwinklung des Tripodegelenks (1) der Außenring (7) relativ zum Innenring (9) in Axialrichtung des Achszapfens (5) und der Innenring (9) auf dem Achszapfen (5) gegenüber deren Stellung bei nicht abgewinkeltem Tripodegelenk (1) verschoben sind und dass mit zunehmender Abwinklung des Tripodegelenks (1) aus der nicht abgewinkelten Stellung zuerst der Innenring (9) auf dem Achszapfen (5) und dann der Außenring (7) relativ zum Innenring (9) in Axialrichtung des Achszapfens (5) verschoben werden.

2. Tripodegelenk (1) gemäß dem vorhergehenden Anspruch, wobei der Einschnürungsabschnitt (9d, 9e) durch einen konkav gekrümmten, bevorzugt kugelflächenförmigen, Bereich gebildet ist.

3. Tripodegelenk (1) gemäß einem der vorhergehenden Ansprüche, wobei der Einschnürungsabschnitt (9d, 9e) komplementär zu der zugehörigen Kugelendfläche (16) ausgebildet ist.

4. Tripodegelenk (1) gemäß einem der beiden vorhergehenden Ansprüche, wobei das Verhältnis aus dem, gegebenenfalls kleinsten, Krümmungsradius des Einschnürungsabschnitts (9d, 9e) und dem, gegebenenfalls größten Krümmungsradius der zugehörigen Kugelendfläche (16) zwischen 1, 00 und 1, 01, bevorzugt zwischen 1,05 und 1,08 liegt, wobei die Bereichsgrenzen jeweils mit eingeschlossen sind.

5. Tripodegelenk (1) gemäß einem der vorhergehenden Ansprüche, wobei die Bohrung (20) zwei sich in Axialrichtung unter Ausbildung eines stetigen Übergangs auf einer Seite des zylindrischen Abschnitts (9c) anschließende, die zugehörige Kugelendfläche hintergreifende Einschnürungsabschnitte (9d, 9e) zur Begrenzung der Verschiebebewegung aufweist.

6. Tripodegelenk (1) gemäß einem der vorhergehenden Ansprüche, wobei der maximale Verschiebeweg des Innenrings (9) bezüglich des Achszapfens (5) in Axialrichtung des Achszapfens (5) kleiner ist als der maximale Verschiebeweg des Außenrings (7) bezüglich des Innenrings (9) in Axialrichtung des Achszapfens (5).

7. Tripodegelenk (1) gemäß einem der vorhergehenden Ansprüche, wobei das Verhältnis aus maximalem Verschiebeweg des Innenrings (9) bezüglich des Achszapfens (5) in Axialrichtung des Achszapfens (5) zu maximalem Verschiebeweg des Außenrings (7) bezüglich des Innenrings (9) in Axialrichtung des Achszapfens (5) weniger als 1:2 beträgt, bevorzugt weniger als 1:3, noch bevorzugter weniger als 1:3,3, beispielsweise 1:3,48 beträgt.

8. Tripodegelenk (1) gemäß einem der vorhergehenden Ansprüche, wobei der maximal mögliche Verschiebeweg der Wälzkörper (8) bezüglich des Innenrings (9) in Axialrichtung kleiner als der maximal mögliche Verschiebeweg in Axialrichtung der Wälzkörper (8) bezüglich des Außenrings (7) ist.

9. Tripodegelenk (1) gemäß einem der vorhergehenden Ansprüche, wobei die Wälzkörper (8) Nadeln sind und die Bewegung der Nadeln (8) in Axialrichtung bezogen auf deren Wälzbewegung durch Auskragungen (9a, 9b, 7a) am Innenring (9) und/oder Außenring (8) begrenzt werden.

10. Tripodegelenk (1) gemäß dem vorhergehenden Anspruch, wobei die Auskragungen (9a, 9b) im Zentrum der axialen Stirnfläche der Nadeln (8) eine Berührfläche mit diesen ausbilden.

11. Tripodegelenk (1) gemäß dem vorhergehenden Anspruch, wobei die Stirnflächen der Nadeln (8) konvex geformt sind.

12. Verwendung des Tripodegelenks gemäß einem der vorhergehenden Ansprüche in einem Kraftfahrzeug.

## Claims

1. A tripod joint (1) comprising
an outer joint element (2) having formed therein a number of elongated axially extending tracks (4) that are distributed across the inner circumference thereof;
an inner joint element (3) having a number of radial axle journals (5) that are distributed across the outer circumference thereof;
at least a number of rollers (6) that correspond to the number of axle journals (5),
wherein each roller (6) is pivotably held by a central bore hole (20) on the associated axle journal (5) and being in engagement with the elongated tracks (4), wherein the roller (6) is displaceable in the associated track (4) in the axial direction of the outer joint element (2);
wherein each axle journal (5), on its circumference, has two outer, diametrically opposed ball end faces (16) for engaging into the borehole (20);
wherein the bore hole (20) has a cylindrical part (9c) for engaging into the ball end faces (16) for displaceably supporting the roller (6) in relation to the axle journal (5), and at least a necked-down portion (9d, e) adjoining in an axial direction to form a constant junction on one side of the cylindrical part (9c) and engaging behind the associated ball end face to limit the displacement movement, and wherein the necked-down portion is arranged such that, in at least one position of the tripod joint, the necked-down portion (9d, e) abuts the axle journal,
and **characterized in that**
the roller (6) comprises an outer ring (7), an inner ring (9) comprising the bore hole (20), as well as rolling elements (8) optionally arranged therebetween,
that the outer ring (7), in relation to inner ring (9), is displaceable in an axial direction of the axle journal (5); and
that the tripod joint (1) is configured such that, at the latest at maximal bending of the tripod joint (1), the outer ring (7), in relation to the inner ring (9), is displaced in the axial direction of the axle journal (5), and the inner ring (9) is displaced on the axle journal (5) in relation to the position with non-bended tripod joint (1); and
that, with increasing bending of the tripod joint (1) from the non-bended position, initially the inner ring (9) is displaced on the axle journal (5) and subsequently the outer ring (7) is displaced in relation to the inner ring (9) in an axial direction of the axle journal (5).

2. The tripod joint (1) according to the preceding claim, wherein the necked-down portion (9d, e) is formed by a concavely bent region, and is preferably formed by a region having ball surface form.

3. The tripod joint (1) according to one of the preceding claims, wherein the necked-down portion (9d, e) is formed complementary to the associated ball end face (16).

4. The tripod joint (1) according to one of the two preceding claims, wherein the ratio of the optionally smallest radius of curvature of the necked-down portion (9d, e) and the optionally largest radius of curvature of the associated ball end face (16) is between 1.00 and 1.01, preferably between 1.05 and 1.08, wherein each of the two range limits are included.

5. The tripod joint (1) according to one of the preceding claims, wherein the bore hole (20) has two necked-down portions (9d, e) adjoining in an axial direction to form a constant junction on one side of the cylindrical part (9c) and engaging behind the associated ball end face to limit the displacement movement.

6. The tripod joint (1) according to one of the preceding claims, wherein the maximal displacement path of the inner ring (9) in relation to the axle journal (5) in an axial direction of the axle journal (5) is smaller than the maximal displacement path of the outer ring (7) in relation to the inner ring (9) in an axial direction of the axle journal (5).

7. The tripod joint (1) according to one of the preceding claims, wherein the ratio of the maximal displacement path of the inner ring (9) in relation to the axle journal (5) in an axial direction of the axle journal (5) and the maximal displacement path of the outer ring (7) in relation to the inner ring (9) in an axial direction of the axle journal (5) is less than 1:2, preferably less than 1: 3, more preferably less than 1:3,3, for example 1:3.48.

8. The tripod joint (1) according to one of the preceding claims, wherein the maximally possible displacement path of the rolling elements (8) in relation to the inner ring (9) in an axial direction is smaller than the maximally possible displacement path in an axial direction of the rolling elements (8) in relation to the outer ring (7).

9. The tripod joint (1) according to one of the preceding claims, wherein the rolling elements (8) are needles and the movement of the needles (8) in an axial direction based on the rolling movement thereof is limited by projections (9a, 9b, 7a) at the inner ring (9) und/or the outer ring (8).

10. The tripod joint (1) according to the preceding claim, wherein the projections (9a, 9b), in the center of the axial front face of the needles (8), form a contact surface with the latter.

11. The tripod joint (1) according to the preceding claim, wherein the front faces of thee needles (8) are convexly formed.

12. Use of the tripod joint according to one of the preceding claims in a vehicle.

## Revendications

1. Joint tripode (1), comprenant:
un élément extérieur de joint (2) ayant plusieurs pistes (4) oblongues réparties sur la circonférence intérieure de ce dernier, s étendant axialement, y formées à l intérieur ;
un élément intérieur de joint (3) ayant plusieurs tourillons d arbre (5) radiaux, répartis sur la circonférence extérieure de ce dernier ;
au moins un nombre de rouleaux (6) correspondant au nombre des tourillons d arbre (5), le rouleau (6) étant maintenu pivotant sur le tourillon d arbre (5) y afférant respectivement avec un alésage central (20) et étant en engrenage avec les pistes oblongues (4), le rouleau (6) étant déplaçable dans la piste (4) y afférente en direction axiale de l élément extérieur du joint (2) ;
chacun des tourillons d arbre (5) présentant sur sa circonférence deux surfaces d embout sphériques (16) extérieures, diamétralement opposées pour l engrenage dans l alésage (20) ;
l alésage (20) présentant une portion cylindrique (9c) pour l engrenage avec les surfaces d embout sphérique (16) pour loger de manière déplaçable les rouleaux (6) relativement au tourillon d arbre (5) et au moins une section de rétrécissement (9d, 9^{e}) suivant en direction axiale en formant une transition constante sur un côté de la portion cylindrique (9c) et saisissant par derrière la section de rétrécissement (9d, 9e) en vue de limiter le mouvement de déplacement, et
la section de rétrécissement étant agencée de sorte à ce que la section de rétrécissement (9d, 9e) est adjacente au tourillon d arbre dans au moins une position du joint tripode,
et **caractérisé en ce que**
le rouleau (6) comporte une bague extérieure (7), une bague intérieure (9) présentant l alésage (20) ainsi qu en option des corps de cylindre (6) disposé entre eux,
que la bague extérieure (7) est déplaçable relativement à la bague intérieure (9) en direction axiale du tourillon d arbre (5) et
que le joint tripode (1) est réalisé de sorte qu au plus tard lors du pli maximal du joint tripode (1), la bague extérieure (7) est déplacée relativement à la bague intérieure (9) en direction axiale du tourillon d arbre (5) et la bague intérieure (9) est déplacée sur le tourillon d arbre (5) en face de leur position par un joint tripode (1) non plié et
qu avec un pli croissant du joint tripode (1) à partir de la position non pliée, c est d abord la bague intérieure (9) sur le tourillon d arbre (5) et ensuite la bague extérieure (7) qui sont déplacés relativement à la bague intérieure (9) en direction axiale du tourillon d arbre (5).

2. Joint tripode (1) selon la revendication précédente, la section de rétrécissement (9d, 9e) étant réalisée par une section courbée de manière concave, de préférence sphérique.

3. Joint tripode (1) selon l une des revendications précédentes, la section de rétrécissement (9d, 9e) étant réalisée de manière complémentaire aux surfaces d embout sphérique (16) y afférentes.

4. Joint tripode (1) selon l une des deux revendications précédentes, le rapport entre le rayon de courbure éventuellement le plus petit de la section de rétrécissement (9d, 9e) et le rayon de courbure éventuellement le plus grand de la surface d embout sphérique (16) y afférente se situant entre 1,00 et 1,01, de préférence entre 1,05 et 1,08, les limites de sections étant chacune incluses.

5. Joint tripode (1) selon l une des revendications précédentes, l alésage (20) présentant deux sections de rétrécissement (9d, 9^{e}) suivant en direction axiale en réalisant une transition constante sur un côté de la section cylindrique (9c) et saisissant par derrière la surface d embout sphérique y afférente afin de limiter le mouvement de déplacement.

6. Joint tripode (1) selon l une des revendications précédentes, la trajectoire de déplacement maximal de la bague intérieure (9) concernant le tourillon d arbre (5) en direction axiale du tourillon d arbre (5) étant plus petit que la trajectoire de déplacement maximal de la bague extérieure (7) concernant la bague intérieure (9) en direction axiale du tourillon d arbre (5).

7. Joint tripode (1) selon l une des revendications précédentes, le rapport de la trajectoire de déplacement maximal de la bague intérieure (9) concernant le tourillon d arbre (5) en direction axiale du tourillon d arbre (5) par rapport à la trajectoire de déplacement maximal de la bague extérieure (7) concernant la bague intérieure (9) en direction axiale du tourillon d arbre (5) étant inférieur à 1 : 2, préférentiellement inférieur à 1 : 3, plus préférentiellement inférieur à 1 : 3,3, par exemple 1 : 3,48.

8. Joint tripode (1) selon l une des revendications précédentes, la trajectoire de déplacement maximal possible des corps de cylindre (8) concernant la bague intérieure (9) en direction axiale étant inférieure à la trajectoire de déplacement maximal possible en direction axiale des corps de cylindre (8) concernant la bague extérieure (7).

9. Joint tripode (1) selon l une des revendications précédentes, les corps de cylindre (8) étant des aiguilles et le mouvement des aiguilles (8) en direction axiale par rapport au mouvement de cylindre de celles-ci étant limité par des collerettes (9a, 9b, 7a) sur la bague intérieure (9) et / ou la bague extérieure (8).

10. Joint tripode (1) selon la revendication précédente, les collerettes (9a, 9b) formant une surface de contact avec celles-ci au centre de la face frontale axiale des aiguilles (9).

11. Joint tripode (1) selon la revendication précédente, les faces frontales des aiguilles (8) étant formées de manière convexe.

12. Utilisation du joint tripode selon l une des revendications précédentes dans un véhicule.
